# EUROPEAN PATENT APPLICATION

(11) **EP 4 496 085 A1**
(43) Date of publication of application: **22.01.2025**
(21) Application number: 23884429.4
(22) Date of filing: 31.08.2023
(51) Int. Cl.: H01M 50/172, H01M 50/124, H01M 50/14

(54) **BATTERY CELL AND PREPARATION METHOD THEREFOR, AND BATTERY**

(30) Priority: 31.10.2022 CN 202222885099 U
(71) Applicant: Zhuhai CosMX Battery Co., Ltd., Zhuhai, Guangdong 519180 (CN)
(72) Inventor: SUN, Hanli, Zhuhai, Guangdong 519180 (CN); XIANG, Yu, Zhuhai, Guangdong 519180 (CN); SHENG, Donghui, Zhuhai, Guangdong 519180 (CN); XIE, Jichun, Zhuhai, Guangdong 519180 (CN)
(74) Representative: Murgitroyd & Company
(86) International application number: PCT/CN2023/116103
(87) International publication number: WO 2024/093492

(57) **Abstract**

Disclosed are a battery cell and a preparation method thereof, and a battery. The battery cell includes a battery cell body and a packaging body configured to package the battery cell body; the packaging body has a sealing strip that surrounds the battery cell body; along a direction from an outer side of the battery cell body to the battery cell body, the sealing strip is sequentially formed with a first edge, a middle line and a second edge; along the direction from the outer side of the battery cell body to the battery cell body, the sealing strip has a middle point, and the middle line is formed by connecting all middle points of the sealing strip; and a peel force of the sealing strip at the first edge is greater than a peel force of the sealing strip at the middle line. When the battery cell body has a tendency to rupture the sealing strip and subsequently detach from the packaging body, even if first line of protection at a side, close to the battery cell body, of the sealing strip is ruptured by the battery cell body, a sealing is also reinforced at the first edge on a side, away from the battery cell body, of the sealing strip, which constructs second line of protection on the sealing strip, thereby solving a problem of safety risks caused by insufficient packaging strength.

## Description

### TECHNICAL FIELD

The present application relates to the field of battery technologies, and in particular, to a battery cell and a preparation method thereof, and a battery.

### BACKGROUND

A battery cell body of a pouch lithium battery is generally packaged by an aluminum laminated film (i.e., a packaging body), a packaging reliability of the aluminum laminated film is crucial to safety of a whole battery cell, and a peel force is an index to measure a packaging strength (i.e., sealing performance) of the packaging body. However, when a peel force test is conducted by stretching a sealing strip of the packaging body from the battery cell body to an outer side of the battery cell body, a packaging strength of the sealing strip at a side close to the battery cell body is greater than a packaging strength of the sealing strip at a middle position, which is greater than a packaging strength of the sealing strip at a side away from the battery cell body. In other words, the sealing strip of the packaging body provides sealing capability to the battery cell body with only single line of protection at a side close to the battery cell body, and therefore, there are safety risks.

### SUMMARY

In view of this, the present application provides a battery cell and a preparation method thereof, and a battery, which can solve a problem of safety risks.

The present application provides a battery cell, which includes a battery cell body and a packaging body configured to package the battery cell body; the packaging body has a sealing strip that surrounds the battery cell body; along a direction from an outer side of the battery cell body to the battery cell body, the sealing strip is sequentially formed with a first edge, a middle line and a second edge; along the direction from the outer side of the battery cell body to the battery cell body, the sealing strip has a middle point, and the middle line is formed by connecting all middle points of the sealing strip; and a peel force of the sealing strip at the first edge is greater than a peel force of the sealing strip at the middle line.

Optionally, in the battery cell above-mentioned, a peel force of the sealing strip at the second edge is greater than the peel force of the sealing strip at the middle line.

Optionally, in the battery cell above-mentioned, along a direction from the middle line to the first edge, a peel force of the sealing strip has an increasing trend.

Optionally, in the battery cell above-mentioned, along a direction from the second edge to the middle line, a peel force of the sealing strip has a decreasing trend.

Optionally, in the battery cell above-mentioned, the peel force of the sealing strip at the first edge is greater than the peel force of the sealing strip at the middle line by 5 N/10 mm to 50 N/10 mm.

Optionally, in the battery cell above-mentioned, the sealing strip includes a top sealing strip; and a peel force of the top sealing strip on a surface, away from the battery cell body, of the top sealing strip is greater than a peel force of the top sealing strip at the middle point along the direction from the outer side of the battery cell body to the battery cell body.

Optionally, in the battery cell above-mentioned, the sealing strip includes a side sealing strip; and a peel force of the side sealing strip on a surface, away from the battery cell body, of the side sealing strip is greater than a peel force of the side sealing strip at the middle point along the direction from the outer side of the battery cell body to the battery cell body.

Optionally, in the battery cell above-mentioned, the sealing strip includes a thermally-fusible resin layer; and along the direction from the outer side of the battery cell body to the battery cell body, a resin distribution of the thermally-fusible resin layer is a transverse distribution.

Optionally, in the battery cell above-mentioned, along a direction from the first edge to the middle line, a resin arrangement density of the thermally-fusible resin layer has a decreasing trend.

Optionally, in the battery cell above-mentioned, along a direction from the middle line to the second edge, a resin arrangement density of the thermally-fusible resin layer has a decreasing trend.

The present application further provides a method for preparing a battery cell, which includes: S1210: fixing a sealing strip of a packaging body of the battery cell by using an insulating sealing head, the sealing strip including a first aluminum laminated film layer and a second aluminum laminated film layer that are folded over each other, and both the first aluminum laminated film layer and the second aluminum laminated film layer including a thermally-fusible resin layer; and S1220: performing a heat sealing on the sealing strip after fixing by using an electromagnetic heating coil to achieve a thermally-fusing connection between two thermally-fusible resin layers, so that along a direction from an outer side of a battery cell body of the battery cell to the battery cell body, the sealing strip is sequentially formed with a first edge, a middle line and a second edge, where the battery cell body is surrounded by the sealing strip, the sealing strip has a middle point along the direction from the outer side of the battery cell body to the battery cell body, a middle line is formed by connecting all middle points of the sealing strip, and a peel force of the sealing strip at the first edge is greater than a peel force of the sealing strip at the middle line.

Optionally, in the method above-mentioned, a duration of the heat sealing does not exceed 5 s.

The present application further provides a battery, which includes any of the battery cells above-mentioned.

In the battery cell of the present application, the sealing strip is sequentially divided into the first edge, the middle line and the second edge along the direction from the outer side of the battery cell body to the battery cell body, and the sealing strip has a first boundary and a second boundary along the direction from the outer side of the battery cell body to the battery cell body; the first edge is a region formed with the first boundary, and the second edge is a region formed with the second boundary; the middle line is a line connecting all the middle points between the first boundary and the second boundary along the direction from the outer side of the battery cell body to the battery cell body; and when a peel force test is conducted by stretching along a direction from the battery cell body to the outer side of the battery cell body, the peel force of the sealing strip at the first edge is greater than the peel force of the sealing strip at the middle line. The above arrangement is adopted, so that when the battery cell body has a tendency to rupture the sealing strip and subsequently detach from the packaging body, even if first line of protection at the second edge is ruptured by the battery cell body, a sealing is also reinforced at the first edge, which constructs second line of protection on the sealing strip, thereby solving a problem of safety risks caused by insufficient packaging strength.

### BRIEF DESCRIPTION OF THE DRAWINGS

In order to more clearly illustrate the technical solutions in the embodiments of the present application or the related technologies, and the accompanying drawings required in the description of the embodiments or the related technologies may be briefly described below. Obviously, the accompanying drawings in the following description are merely embodiments of the present application, and as for a person of ordinary skill in the art, other accompanying drawings may be obtained according to the provided accompanying drawings without creative efforts.
FIG. 1 is a schematic structural diagram of a battery cell according to the present application.
FIG. 2 is a partial enlarged view of A in FIG. 1.
FIG. 3 is a curve of a pull force during a peel force test conducted on a sealing strip according to the related technologies.
FIG. 4 is a curve of a pull force during a peel force test conducted on a sealing strip according to the present application.
FIG. 5 is a scanning electron microscope image of a first edge of a sealing strip after peeling according to the related technologies.
FIG. 6 is a scanning electron microscope image of a region near a middle line of a sealing strip after peeling according to the related technologies.
FIG. 7 is a scanning electron microscope image of a second edge of a sealing strip after peeling according to the related technologies.
FIG. 8 is a scanning electron microscope image of a first edge of a sealing strip after peeling according to the present application.
FIG. 9 is a scanning electron microscope image of a region near a middle line of a sealing strip after peeling according to the present application.
FIG. 10 is a scanning electron microscope image of a second edge of a sealing strip after peeling according to the present application.
FIG. 11 is a schematic structural diagram of an electromagnetic heating coil and a packaging body of a battery cell according to the present application.
FIG. 12 is a schematic flowchart of a method for preparing a battery cell according to the present application.

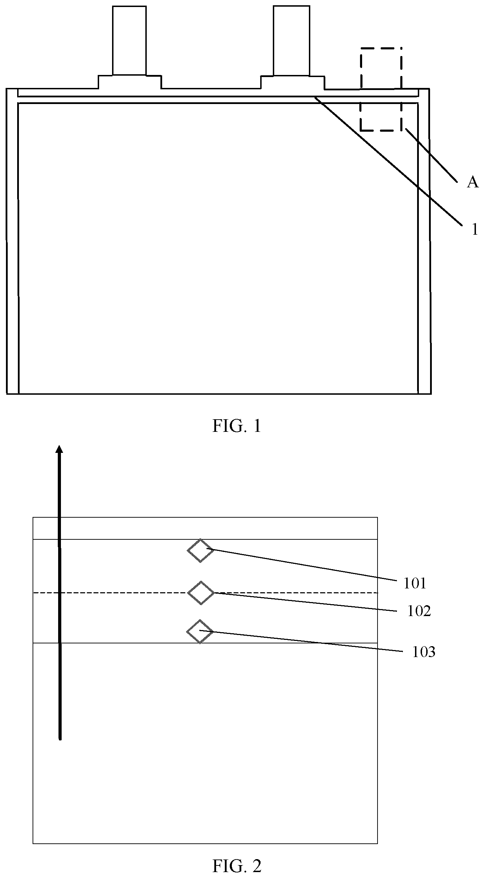

Reference numerals in FIGS. 1 to 11:
1. sealing strip; 2. electromagnetic heating coil; 101. first edge; 102. middle line; 103. second edge; and "->" representing a pull force direction during a peel force test.

### DETAILED DESCRIPTION OF THE EMBODIMENTS

The following clearly and completely describes the technical solutions in the embodiments of the present application with reference to the accompanying drawings in the embodiments of the present application. Apparently, the described embodiments are only a part but not all of the embodiments of the present application. All other embodiments obtained by a person of ordinary skill in the art based on the embodiments of the present application without creative efforts shall fall within the protection scope of the present application.

At present, a packaging of a lithium ion battery adopts a resistance heating manner. A heating base is heated through a heating rod, and then a sealing head is heated by the heating base. A nylon layer is heated by the sealing head, and then a heat of the nylon layer is transferred to an aluminum layer, and finally a heat is further transferred to a thermally-fusible resin layer. The entire heating process is a contact-based longitudinal heat conduction, and a resin distribution of the thermally-fusible resin layer is irregularly arranged, so that a packaging strength of a sealing strip at a side close to a battery cell body is greater than a packaging strength of the sealing strip at a middle position, which is greater than a packaging strength of the sealing strip at a side away from the battery cell body. Therefore, the sealing strip of a packaging body provides sealing capability to the battery cell body with only single line of protection at a side close to the battery cell body, which poses safety risks.

As shown in FIG. 1 and FIG. 2, the embodiments of the present application provide a battery cell. The battery cell includes a battery cell body and a packaging body configured to package the battery cell body; the packaging body has a sealing strip 1 that surrounds the battery cell body; and along a direction from an outer side of the battery cell body to the battery cell body, the sealing strip 1 is sequentially formed with a first edge 101, a middle line 102 and a second edge 103. Along the direction from the outer side of the battery cell body to the battery cell body, the sealing strip 1 has a middle point, and the middle line 102 is formed by connecting all middle points of the sealing strip 1 that surrounds the battery cell body. When a peel force test is conducted by stretching along a direction from the battery cell body to the outer side of the battery cell body, a peel force of the sealing strip 1 at the first edge 101 is greater than a peel force of the sealing strip 1 at the middle line 102, i.e., a packaging strength of the sealing strip 1 at the first edge 101 is greater than a packaging strength of the sealing strip 1 at the middle line 102.

It should be noted that, along the direction from the outer side of the battery cell body to the battery cell body, the sealing strip 1 has a first boundary and a second boundary; the first edge is a region formed with the first boundary, and the first edge is a region; the second edge is a region formed with the second boundary, and the second edge is a region; and the middle line is a line connecting all the middle points between the first boundary and the second boundary along the direction from the outer side of the battery cell body to the battery cell body, and the middle line is a dividing line that bisects the sealing strip 1.

When a peel force test is conducted by stretching along a direction from the battery cell body to the outer side of the battery cell body, the peel force of the sealing strip 1 at the first edge 101 is greater than the peel force of the sealing strip 1 at the middle line 102. The above arrangement is adopted, so that when the battery cell body has a tendency to rupture the sealing strip 1 and subsequently detach from the packaging body, even if first line of protection at a side, close to the battery cell body, of the sealing strip 1 is ruptured by the battery cell body, i.e., the second edge 103, a sealing is also reinforced at the first edge 101 on a side, away from the battery cell body, of the sealing strip 1, which constructs second line of protection on the sealing strip 1, thereby solving a problem of safety risks caused by insufficient packaging strength.

It should be noted that, when the peel force test is conducted, a portion of the sealing strip 1 is cut as a sample for a peel force test, a width of the sample taken from the sealing strip 1 is 10 mm, and a width direction of the sample is perpendicular to the direction from the battery cell body to the outer side of the battery cell body; and when the peel force test is conducted by stretching along the direction from the battery cell body to the outer side of the battery cell body, a stretching speed is 200 mm/min.

Because the sealing strip 1 has a strong elastic deformation, the sealing strip 1 at both the second edge 103 and the first edge 101 have a significant deformation when the sealing strip 1 is ruptured.

In some embodiments of the present application, a peel force of the sealing strip 1 at the second edge 103 is greater than the peel force of the sealing strip 1 at the middle line 102.

When a peel force test is conducted by stretching along a direction from the battery cell body to the outer side of the battery cell body, the peel force of the sealing strip 1 at the second edge 103 is greater than the peel force of the sealing strip 1 at the middle line 102, which is less than the peel force of the sealing strip 1 at the first edge 101, i.e., a packaging strength of the sealing strip 1 at the second edge 103 and a packaging strength of the sealing strip 1 at the first edge 101 are both greater than a packaging strength of the sealing strip 1 at the middle line 102. The above arrangement is adopted, so that when the battery cell body has a tendency to rupture the sealing strip 1 and subsequently detach from the packaging body, two lines of protection of the packaging body are formed at the second edge 103 and the first edge 101, thereby solving a problem of safety risks caused by insufficient packaging strength.

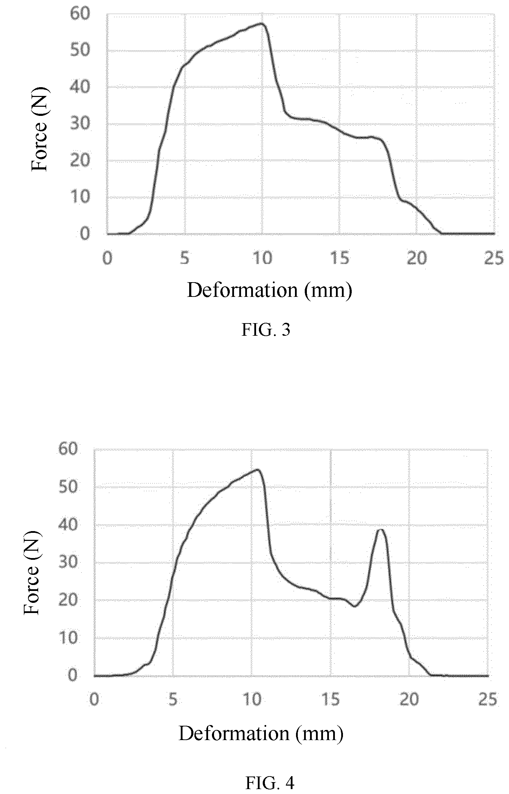

Referring to FIG. 3, FIG. 3 illustrates a curve of a pull force value when a peel force test is conducted on a test sample taken from a sealing strip 1 of a battery cell by stretching along a direction from a battery cell body to an outer side of the battery cell body in the related technologies. It can be seen from FIG. 3 that the curve of the pull force in the related technologies is unimodal, a pull force value of the test sample at a second edge is greater than a pull force value of the test sample at a middle line, which is greater than a pull force value of the test sample at a first edge, and the sealing strip provides sealing capability to the battery cell body with only single line of protection at the second edge close to a center side of the battery cell body.

Because the sealing strip 1 has a strong elastic deformation, the sealing strip 1 has a significant deformation when the sealing strip 1 is ruptured.

In some embodiments of this application, along a direction from the middle line 102 to the first edge 101, a peel force of the sealing strip 1 has an increasing trend. Further, along a direction from the second edge 103 to the middle line 102, a peel force of the sealing strip 1 has a decreasing trend.

Referring to FIG. 4, FIG. 4 illustrates a curve of a pull force value when a peel force test is conducted on a test sample taken from the sealing strip 1 of the packaging body by stretching along the direction from the battery cell body to the outer side of the battery cell body in the present application. It can be seen from FIG. 4 that a pull force curve in the present application is bimodal, a pull force value of the test sample at the second edge 103 is greater than a pull force value of the test sample at the middle line 102, which is less than a pull force value of the test sample at the first edge 101, and the sealing strip 1 provides sealing capability to the battery cell body with dual lines of protection at both the second edge 103 and the first edge 101.

It should be noted that since the sealing strip 1 has a strong elastic deformation, the sealing strip 1 at the second edge 103, the middle line 102 and the first edge 101 all have a significant deformation when the sealing strip 1 is ruptured. As shown in FIG. 4, the second edge 103 deforms to a horizontal coordinate where a first peak is located, i.e., around 10 mm; and the first edge 103 deforms to a horizontal coordinate where a second peak is located, i.e., around 17 mm.

In some embodiments of the present application, the peel force of the sealing strip 1 at the first edge 101 is greater than the peel force of the sealing strip 1 at the middle line 102 by 5 N/10 mm to 50 N/10 mm.

The above arrangement is adopted, so that after the sealing strip 1 at the second edge 103 is pulled apart, a reinforcing protection line may be added at the first edge 101, which not only makes the sealing strip 1 of the packaging body provide sealing capability to the battery cell body, but also makes the sealing strip 1 of the packaging body have the dual lines of protection at the second edge 103 and the first edge 101, thereby effectively ensuring a packaging effect of a battery cell.

In some embodiments of the present application, the sealing strip 1 includes a top sealing strip. The top sealing strip has a top middle point along the direction from the outer side of the battery cell body to the battery cell body; and a peel force of the top sealing strip on a surface, close to the battery cell body, of the top sealing strip is greater than a peel force of the top sealing strip at the top middle point.

It should be noted that a surface, away from the battery cell body, of the top sealing strip is the first edge 101 of the top sealing strip; the surface, close to the battery cell body, of the top sealing strip is the second edge 103 of the top sealing strip; and the top middle point is a point at the middle line 102 of the top sealing strip.

Adopting the above arrangement ensures that packaging strengths of the top sealing strip at both the first edge 101 and the second edge 103 are greater than a packaging strength of the top sealing strip at the middle line 102, which ensures that the top sealing strip provides sealing capability to the battery cell body, and also has the dual lines of protection at the second edge 103 and the first edge 101, thereby solving a problem of safety risks caused by insufficient packaging strength of a top portion of a packaging body of a battery cell.

Further, the sealing strip 1 includes a side sealing strip. The side sealing strip has a side middle point along the direction from the outer side of the battery cell body to the battery cell body; a peel force of the side sealing strip on a surface, close to the battery cell body, of the side sealing strip is greater than a peel force of the top sealing strip at the top lateral point; and the peel force of the side sealing strip on the surface, close to the battery cell body, of the side sealing strip is greater than a peel force of the side sealing strip at the side middle point.

It should be noted that a surface, away from the battery cell body, of the side sealing strip is the first edge 101 of the side sealing strip; the surface, close to the battery cell body, of the side sealing strip is the second edge 103 of the side sealing strip; and the side middle point is a point at the middle line 102 of the side sealing strip.

Adopting the above arrangement ensures that packaging strengths of the side sealing strip at both the first edge 101 and the second edge 103 are greater than a packaging strength of the side sealing strip at the middle line 102, which ensures that the side sealing strip provides sealing capability to the battery cell body, and also has the dual lines of protection at the second edge 103 and the first edge 101, thereby solving a problem of safety risks caused by insufficient packaging strength of a side portion of a packaging body of a battery cell.

Whether at least one of the top sealing strip and the side sealing strip is provided as a structure of the sealing strip 1 may be selected and adjusted according to actual requirements.

In some embodiments of the present application, the sealing strip 1 includes a thermally-fusible resin layer; and the thermally-fusible resin layer is transversely distributed along the direction from the outer side of the battery cell body to the battery cell body.

It should be noted that a material of the thermally-fusible resin layer is polypropylene (PP).

When a heat sealing is performed on the sealing strip 1, a heat is transferred along the direction from the outer side of the battery cell body to the battery cell body, i.e., the heat is transferred from the sealing strip 1 at the first edge 101 to the sealing strip 1 at the middle line 102, and then the heat is transferred from the sealing strip 1 at the middle line 102 to the sealing strip 1 at the second edge 103. At this time, along the direction from the outer side of the battery cell body to the battery cell body, a resin distribution of a PP layer (i.e., the thermally-fusible resin layer) of the sealing strip 1 exhibits a regular transverse distribution pattern. An orderly transverse resin distribution of the PP layer integrally enhances a packaging strength of the sealing strip 1, thereby improving a packaging effect of a packaging body of a battery cell.

In some embodiments of the present application, along a direction from the first edge 101 to the middle line 102, a resin arrangement density of the thermally-fusible resin layer has a decreasing trend, i.e., a resin arrangement density of the thermally-fusible resin layer at the first edge 101 is greater than a resin arrangement density of the thermally-fusible resin layer at a region near the middle line 102.

When a heat sealing is performed on the sealing strip 1, a heat is transferred along the direction from the outer side of the battery cell body to the battery cell body, and therefore, the heat is transferred from the sealing strip 1 at the first edge 101 to the sealing strip 1 at the middle line 102. Obviously, the first edge 101 is a starting end for heat transfer, and the heat transferred outwards from the sealing strip 1 at the first edge 101 is significantly greater than the heat transferred outwards from the sealing strip 1 at the middle line 102, and therefore, a resin arrangement density of the PP layer at a region near the first edge 101 is greater than a resin arrangement density of the PP layer at the region near the middle line 102. Adopting the above arrangement may ensure that the first edge 101 is the starting end for heat transfer, i.e., an end with a highest temperature, thereby resulting in a relatively strong adhesion strength, and when an adhesion layer of the PP layer at a region near the second edge 103 is damaged, a second reinforcing protection line may also be formed at the first edge 101, which significantly improves a packaging effect of a packaging body of a battery cell.

Further, along a direction from the middle line 102 to the second edge 103, a resin arrangement density of the thermally-fusible resin layer has a decreasing trend, i.e., a resin arrangement density of the thermally-fusible resin layer at the region near the middle line 102 is greater than a resin arrangement density of the thermally-fusible resin layer at the region near the second edge 103.

Because the heat is transferred along a direction from the outer side of the battery cell body to a center of the battery cell body when the heat sealing is performed on the sealing strip 1, the heat is transferred from the sealing strip 1 at the middle line 102 to the sealing strip 1 at the second edge 103, and therefore, the resin arrangement density of the PP layer at the region near the second edge 103 is less than the resin arrangement density of the PP layer at the region near the middle line 102. Adopting the above arrangement further ensures that a heat transfer direction of the sealing strip 1 is a transverse arrangement direction from the first edge 101 to the second edge 103.

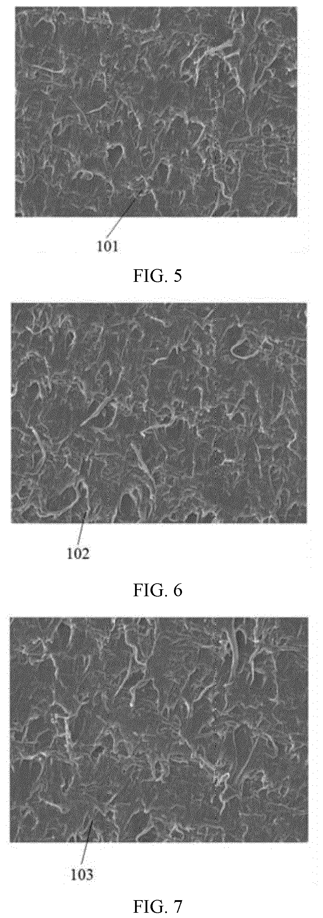

Please refer to FIGS. 5 to 7, FIGS. 5 to 7 are scanning electron microscope images of a PP layer of a sealing strip after peeling in the related technologies. It can be seen from FIGS. 5 to 7 that a resin distribution of the PP layer of the sealing strip in the related technologies is in an irregular arrangement, white shadows in FIGS. 5 to 7 refer to the resin distribution, a resin distribution state of the PP layer at a side close to a battery cell body (i.e., a side of a first edge shown in FIG. 5), a resin distribution state of the PP layer at a middle position (i.e., a region near a middle line shown in FIG. 6), and a resin distribution state of the PP layer at a side close to an outer side of the battery cell body (i.e., a side of a second edge shown in FIG. 7) are consistent, i.e., the irregular arrangement.

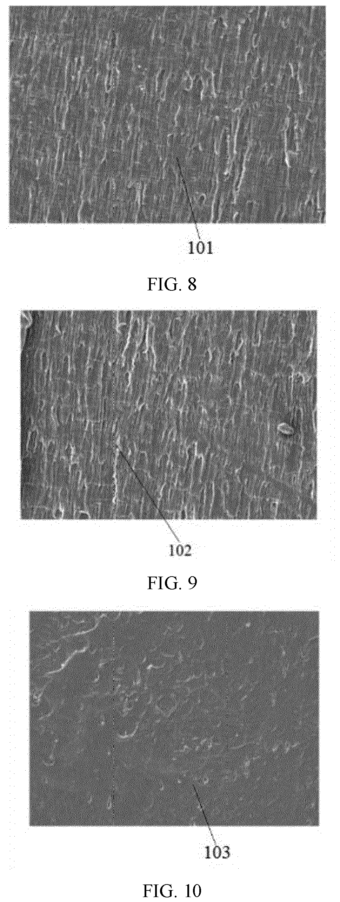

Referring to FIGS. 8 to 10, FIGS. 8 to 10 are scanning electron microscope images of a PP layer of a sealing strip after peeling in the present application. It can be seen from FIGS. 8 to 10 that along the direction from the outer side of the battery cell body to the center of the battery cell body, a resin distribution of the PP layer in the present application exhibits a regular transverse arrangement pattern, and a resin arrangement density of the PP layer at a region near the first edge 101 shown in FIG. 8 is greater than a resin arrangement density of the PP layer at a region near the middle line 102 shown in FIG. 9; and the resin arrangement density of the PP layer at the region near the middle line 102 shown in FIG. 9 is greater than a resin arrangement density of the PP layer at the second edge 103 shown in FIG. 10.

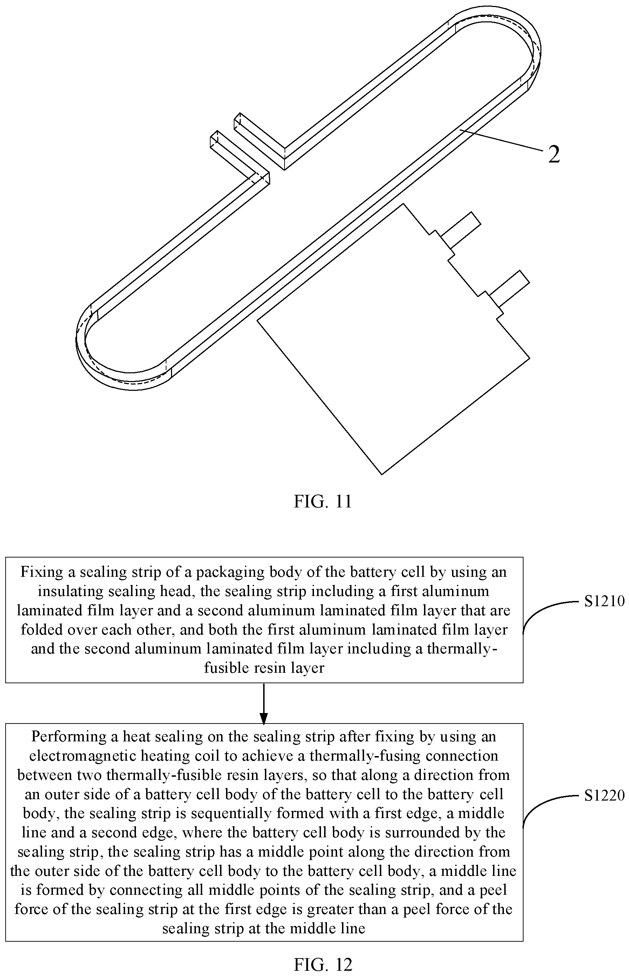

As shown in FIG. 11, the present application may further adopt a heat sealing structure to perform a heat sealing on the battery cell described above; and the heat sealing structure includes an electromagnetic heating coil 2 and an insulating sealing head.

It should be noted that the insulating sealing head is made of epoxy resin; and the insulating sealing head is provided with a position limiter, and a size of the insulating sealing head is consistent with a size of a conventional metal sealing head.

It should be noted that the packaging body is an aluminum laminated film having a pouch packaging; a single aluminum laminated film includes athermally-fusible resin layer, an aluminum layer and a heating nylon layer that are sequentially stacked from inside to outside; the sealing strip 1 includes a first aluminum laminated film layer and a second aluminum laminated film layer that are folded over each other; and the thermally-fusible resin layer is a PP layer.

In an embodiment, as shown in FIG. 12, a method for preparing a battery cell includes: S1210: fixing a sealing strip of a packaging body of the battery cell by using an insulating sealing head, the sealing strip including a first aluminum laminated film layer and a second aluminum laminated film layer that are folded over each other, and both the first aluminum laminated film layer and the second aluminum laminated film layer including a thermally-fusible resin layer; and S1220: performing a heat sealing on the sealing strip after fixing by using an electromagnetic heating coil to achieve a thermally-fusing connection between two thermally-fusible resin layers, so that along a direction from an outer side of a battery cell body of the battery cell to the battery cell body, the sealing strip is sequentially formed with a first edge, a middle line and a second edge, where the battery cell body is surrounded by the sealing strip, the sealing strip has a middle point along the direction from the outer side of the battery cell body to the battery cell body, the middle line is formed by connecting all middle points of the sealing strip, and a peel force of the sealing strip at the first edge is greater than a peel force of the sealing strip at the middle line.

A changing magnetic field is generated by the electromagnetic heating coil 2, and an eddy current is generated by the aluminum layer in the changing magnetic field, which in turn generate a heat, so as to achieve a thermally-fusing connection between the two PP layers, folded over each other, of the sealing strip 1.

When the heat sealing is performed on the sealing strip 1 through the heat sealing structure, the sealing strip 1 is clamped by the insulating sealing head, and then the electromagnetic heating coil 2 is charged, and a duration of the heat sealing does not exceed 5 s. Performing the above operations may ensure that the sealing strip 1 is sequentially formed with the first edge 101, the middle line 102 and the second edge 103 along the direction from the outer side of the battery cell body to the center of the battery cell body, and also ensure that packaging strengths of the sealing strip 1 at both the first edge 101 and the second edge 103 are greater than a packaging strength of the sealing strip 1 at the middle line 102. The sealing strip 1 of the packaging body provides sealing capability to the battery cell body, and also has dual lines of protection at both the second edge 103 and the first edge 101, thereby solving a problem of safety risks caused by insufficient packaging strength.

In some embodiments of the present application, during a process of the heat sealing, a spacing distance between the electromagnetic heating coil 2 and the sealing strip 1 does not exceed 5 mm. Adopting the above arrangement may ensure that the heat generated by the aluminum layer is sufficiently large to guarantee a melting effect of the PP layers.

The components or the apparatuses involved in the present application are merely provided as illustrative examples and are not intended to require or imply that the components or the apparatuses must be connected, arranged, or configured shown in the accompanying drawings. As will be appreciated by a person skilled in the art, the components or the apparatuses may be connected, arranged, or configured in any manner. The terms such as "including", "containing", "having", and the like are open-ended terms that mean "including but not limited to", which may be interchanged with each other. The terms "or" and "and" used herein refer to the term "and/or", which may be interchanged with each other, unless the context clearly dictates otherwise. The term "such as" used herein refers to the phrase "such as, but not limited to", which may be interchanged with each other.

It should also be noted that, in the apparatuses of the present application, the components may be decomposed and/or recombined. Such decomposition and/or recombination should be considered as equivalent solutions of the present application.

The above descriptions of the disclosed aspects are provided to enable any person skilled in the art to make or use the present application. Various modifications to these aspects will be readily apparent to a person skilled in the art, and the generic principles defined herein may be applied to other aspects without departing from the scope of the present application. Thus, the present application is not intended to be limited to the aspects shown herein, but is to be accorded the broadest scope consistent with the principles and novel features disclosed herein.

The above descriptions have been presented for purposes of illustration and description. Moreover, such descriptions are not intended to limit the embodiments of the present application to the forms disclosed herein. While various example aspects and embodiments have been discussed above, a person skilled in the art will recognize certain variations, modifications, changes, additions, and sub-combinations thereof.

The above are only preferred embodiments of the present application and are not intended to limit the present application, and any modification, equivalent replacement, etc. made within the spirit and the principles of the present application shall fall within the protection scope of the present application.

## Claims

1. A battery cell, comprising a battery cell body and a packaging body configured to package the battery cell body, wherein the packaging body has a sealing strip that surrounds the battery cell body;
along a direction from an outer side of the battery cell body to the battery cell body, the sealing strip is sequentially formed with a first edge, a middle line and a second edge;
along the direction from the outer side of the battery cell body to the battery cell body, the sealing strip has a middle point, and the middle line is formed by connecting all middle points of the sealing strip; and
a peel force of the sealing strip at the first edge is greater than a peel force of the sealing strip at the middle line.

2. The battery cell according to claim 1, wherein a peel force of the sealing strip at the second edge is greater than the peel force of the sealing strip at the middle line.

3. The battery cell according to claim 1 or 2, wherein along a direction from the middle line to the first edge, a peel force of the sealing strip has an increasing trend.

4. The battery cell according to any one of claims 1 to 3, wherein along a direction from the second edge to the middle line, a peel force of the sealing strip has a decreasing trend.

5. The battery cell according to any one of claims 1 to 4, wherein the peel force of the sealing strip at the first edge is greater than the peel force of the sealing strip at the middle line by 5 N/10 mm to 50 N/10 mm.

6. The battery cell according to any one of claims 1 to 5, wherein the sealing strip comprises a top sealing strip; and
a peel force of the top sealing strip on a surface, away from the battery cell body, of the top sealing strip is greater than a peel force of the top sealing strip at the middle point along the direction from the outer side of the battery cell body to the battery cell body.

7. The battery cell according to any one of claims 1 to 6, wherein the sealing strip comprises a side sealing strip; and
a peel force of the side sealing strip on a surface, away from the battery cell body, of the side sealing strip is greater than a peel force of the side sealing strip at the middle point along the direction from the outer side of the battery cell body to the battery cell body.

8. The battery cell according to any one of claims 1 to 7, wherein the sealing strip comprises a thermally-fusible resin layer; and along the direction from the outer side of the battery cell body to the battery cell body, a resin distribution of the thermally-fusible resin layer is a transverse distribution.

9. The battery cell according to claim 8, wherein along a direction from the first edge to the middle line, a resin arrangement density of the thermally-fusible resin layer has a decreasing trend.

10. The battery cell according to claim 8 or 9, wherein along a direction from the middle line to the second edge, a resin arrangement density of the thermally-fusible resin layer has a decreasing trend.

11. A method for preparing a battery cell, comprising:
S1210: fixing a sealing strip of a packaging body of the battery cell by using an insulating sealing head, the sealing strip comprising a first aluminum laminated film layer and a second aluminum laminated film layer that are folded over each other, and both the first aluminum laminated film layer and the second aluminum laminated film layer comprising a thermally-fusible resin layer; and
S1220: performing a heat sealing on the sealing strip after fixing by using an electromagnetic heating coil to achieve a thermally-fusing connection between two thermally-fusible resin layers, so that along a direction from an outer side of a battery cell body of the battery cell to the battery cell body, the sealing strip is sequentially formed with a first edge, a middle line and a second edge, wherein the battery cell body is surrounded by the sealing strip, the sealing strip has a middle point along the direction from the outer side of the battery cell body to the battery cell body, the middle line is formed by connecting all middle points of the sealing strip, and a peel force of the sealing strip at the first edge is greater than a peel force of the sealing strip at the middle line.

12. The method for preparing the battery cell according to claim 11, wherein a duration of the heat sealing does not exceed 5 s.

13. A battery, comprising the battery cell according to any one of claims 1 to 10.
